# EUROPÄISCHE PATENTSCHRIFT

(11) **EP 3 924 292 B1**
(45) Veröffentlichungstag und Bekanntmachung des Hinweises auf die Patenterteilung: **03.04.2024**
(21) Anmeldenummer: 20703970.2
(22) Anmeldetag: 04.02.2020
(51) Int. Cl.: B67C 7/00

(54) **BEHÄLTERBEHANDLUNGSVORRICHTUNG MIT TRANSPORTELEMENT**
CONTAINER TREATMENT DEVICE WITH TRANSPORT ELEMENT
DISPOSITIF DE TRAITEMENT DES RÉCIPIENTS AVEC ÉLÉMENT DE TRANSPORT

(30) Priorität: 15.02.2019 DE 102019103892
(43) Veröffentlichungstag der Anmeldung: 22.12.2021
(73) Patentinhaber: KHS GmbH, 44143 Dortmund (DE)
(72) Erfinder: MUSZINSKI, Olaf, 65779 Kelkheim (DE)
(86) Internationale Anmeldenummer: PCT/EP2020/052664
(87) Internationale Veröffentlichungsnummer: WO 2020/164953

(56) Entgegenhaltungen:
- EP-A1- 2 987 764
- EP-A1- 3 246 258
- DE-A1- 4 236 784

## Beschreibung

Die Erfindung bezieht sich auf eine Behälterbehandlungsvorrichtung, insbesondere eine Füllmaschine zum Füllen von Dosen oder dergleichen Behälter mit einem flüssigen Füllgut gemäß Oberbegriff Patentanspruch 1.

Behälterbehandlungsvorrichtungen, insbesondere Füllmaschinen zum Füllen von Dosen, insbesondere auch zum Druckfüllen von Dosen mit einem flüssigen Füllgut sind dem Fachmann in unterschiedlichster Form bekannt. Hierbei werden die Dosen der Füllmaschine über einen ersten als Behältereinlauf ausgebildeten Transporteuer zugeführt, anschließend an einen in Behandlungsrichtung nachgelagerten und um eine Maschinenachse umlaufenden Rotor übergeben, sowie von einem dem Rotor in Behandlungsrichtung wiederum nachgelagerten und als Behälterauslauf ausgebildeten zweiten Transporteuer abgeführt.

Entlang einer solcherart ausgebildeten Behälterbehandlungsstrecke, wie sie in einer Füllmaschine realisiert ist, können mehrere jeweils um eine vertikale Maschinenachse rotativ angetriebene Transportelemente vorgesehen sein, die transportmäßig aneinander anschließen und die Behälterbehandlungsstrecke ausbilden, so dass ein Behälter, insbesondere eine Dose, durch Weitergabe von einem umlaufend angetriebenen Transportelement zu einem in Transportrichtung daran anschließenden Transportelement entlang einer mehrfach umgelenkten Behälterbehandlungsstrecke gefördert wird.

Dabei kann auch vorgesehen sein, dass es sich bei den benachbarten Transportelementen um ein rotativ umlaufendes Transportelement sowie um ein dazu benachbartes, die Behälter linear förderndes, Transportelement handelt. Derartige Transportelemente sind auch in der Füllmaschine ausgebildet. Insbesondere kann der Behälterauslauf in Form eines Transfersterns oder Linearförderers realisiert sein, mittels dem die gefüllten, jedoch noch offenen Dosen an einen Verschließer, beispielsweise einen Dosenverschließer, weitergefördert werden.

Bei den als Linearförderer ausgebildeten Transportelementen werden die Behälter im Wesentlichen geradlinig oder alternativ auch kurvenförmig transportiert. Dabei erfolgt der Transport im Wesentlichen auch ohne Änderung der Ortshöhe der Behälter, was jedoch nicht zwingend ist. Derartige als Linearförderer ausgebildete Transportelemente können auch zwischen zwei als rotierende Transportelemente ausgebildeten Transportelementen angeordnet sein.

Bei der Weitergabe der Dosen innerhalb der Füllmaschine von einem Transportelement zu einem in Behandlungsrichtung folgenden Transportelement kommt es häufig zu einer Krümmungsänderung in der Bewegungsbahn der Dosen und damit zu einem Wechsel der auf die Dosen wirkenden Zentripetalbeschleunigung. Dabei kann es dazu kommen, dass die jeweilige Dose einem, durch starke Beschleunigungskräfte verursachten Querruck ausgesetzt wird, bzw. einen solchen erfährt. Durch diesen Querruck kann es zu einem Herausschwappen des Füllguts aus der Dosenmündung kommen.

Dabei ist es wesentlich, dass ein höherer Behälterdurchsatz (Anzahl der geförderten Dosen oder Behälter je Zeiteinheit) in der Regel zu stärkeren Beschleunigungskräften und somit zu einem stärkeren Querruck und somit auch zu einer Verstärkung des Herausschwappens des Füllguts aus der Dosenmündung führt.

Mithin weisen die als Dosenfüller ausgebildeten Füllmaschinen des Standes der Technik sowie der in Behandlungsrichtung nachgelagerte Dosenverschließer häufig auch eine unterschiedliche Teilung auf. Dies führt dazu, dass die Dosen bei der Übergabe an den Transporteuer zwischen Dosenfüller und nachgelagertem Dosenverschließer auf eine höhere Geschwindigkeit beschleunigt werden müssen. Auch diese Beschleunigung ist wesentlich mitverantwortlich für das Schwappverhalten der zu diesem Zeitpunkt noch unverschlossenen Dosen. Insgesamt ist dies insbesondere aus hygienischen Gesichtspunkten, aber auch wegen des Produktverlustes unerwünscht und nachteilig.

In der Praxis wird daher oftmals die Gesamtleistung von betroffenen Füllmaschinen - insbesondere von Dosenfüllmaschinen - und/oder aber auch von Verschließmaschinen, soweit reduziert, bis ein Überschwappen der offenen Dosen entlang der Behälterbehandlungsstrecke gerade nicht mehr auftritt, bzw. so weit reduziert ist, dass die dann noch immer auftretenden Schwappverluste akzeptiert werden können. Letztlich führt diese Vorgehensweise zu erheblichen Leistungsverlusten (Abgefüllte Dosen bzw. Behälter pro Stunde) was aufgrund der damit verbundenen monetären Auswirkungen äußerst unerwünscht ist.

Aus der Druckschrift EP 3 246 258 A1 ist eine Behälterbehandlungsvorrichtung, insbesondere eine Füllmaschine zum Füllen von Behältern mit den Merkmalen des Oberbegriffes des Patentanspruchs 1 bekannt.

Ferner ist aus der Druckschrift DE 42 36 784 A1 eine Dosenzuführeinrichtung für eine Dosenverschließmaschine bekannt, mit einem Dosenzuführförderer eines solchen Aufbaus, dass eine Dose durch Rutschen auf einer Flachschiene mit Dosenführungen an deren gegenüberliegenden Seiten mittels eines Fingers einer Antriebskette einem Verschließdrehkopf, der einem gegenüberliegenden Drehkopf zugekehrt ist, zugeführt wird. Diese Dosenzuführeinrichtung zeichnet sich dadurch aus, dass mindestens einer der beiden Drehköpfe, d. h. Verschließdrehkopf und gegenüberliegender Drehkopf, mit Klauen an seinem Außenumfang versehen ist, derart, dass die Klauen außerhalb eines Teilkreises des Drehkopfes vorstehen, wobei das vorstehende Profil der Klaue aus Zykloiden in einer Form gebildet ist, die einen Dosenkörper nicht durchstößt.

Aufgabe der Erfindung ist es, eine besonders vorteilhafte Behälterbehandlungsvorrichtung anzugeben, mittels welcher ein möglichst querruckfreier Transport der Behälter entlang der Behälterbehandlungsstrecke sowie eine größere Leistung (Behälter pro Zeiteinheit) der Behälterbehandlungsvorrichtung ermöglicht wird.

Dabei ist beispielsweise vorgesehen die Behälterbehandlungsvorrichtung als Füllmaschine zum Füllen von Dosen oder dergleichen Behälter mit einem flüssigen, fließfähigen oder rieselfähigen Füllgut auszubilden.

Ebenfalls ist vorgesehen, die Behälterbehandlungsvorrichtung als Verschließmaschine für das Verschließen der zuvor befüllten Behälter auszubilden.

Die Aufgabe wird durch eine Behälterbehandlungsvorrichtung, insbesondere eine Füllmaschine zum Füllen von Behältern, insbesondere von Dosen oder dergleichen Behälter mit einem flüssigen, fließfähigen oder rieselfähigen Füllgut gemäß den Merkmalen des unabhängigen Patentanspruchs 1 gelöst. Die Unteransprüche betreffen dabei besonders vorteilhafte Weiterbildungen der Erfindung.

Gemäß einem wesentlichen Aspekt bezieht sich die Erfindung auf eine Behälterbehandlungsvorrichtung, insbesondere eine Füllmaschine zum Füllen von Dosen oder dergleichen Behälter mit einem flüssigen Füllgut entlang einer in einer Behandlungsrichtung verlaufenden Behälterbehandlungsstrecke. Die Behälterbehandlungsvorrichtung umfasst hierbei einen ersten als Behältereinlauf ausgebildeten Transporteur, einen in Behandlungsrichtung nachgelagerten und um eine Maschinenachse umlaufenden Rotor, sowie einen dem Rotor in Behandlungsrichtung wiederum nachgelagerten und als Behälterauslauf ausgebildeten zweiten Transporteur.

Dabei sind an dem umlaufenden Rotor mehrere Behandlungspositionen ausgebildet sowie weiterhin ein mit diesem Rotor gleichsinnig synchron um die Maschinenachse mitlaufendes Transportelement vorgesehen, das an einem Umfang um die Maschinenachse verteilt mehrere Transporttaschen aufweist. Der umlaufende Rotor und das mitlaufende Transportelement können auch einstückig oder als eine gemeinsame Baugruppe ausgebildet sein.

Die Transporttaschen weisen ferner jeweils wenigstens eine bezogen auf eine Umlaufrichtung des Transportelements vorauseilende vordere Flanke und wenigstens eine bezogen auf die Umlaufrichtung nacheilende hintere Flanke auf, von denen zumindest die hintere Flanke wenigstens in einem Teilbereich eine erste Anlagefläche zum kontaktschlüssigen Transport der Behälter ausbildet.

Erfindungsgemäß ist dabei vorgesehen, dass der jeweils hinteren Flanke der entsprechenden Transporttasche jeweils ein Transportfinger zugeordnet ist, der zumindest eine zweite Anlagefläche aufweist, die die an der hinteren Flanke ausgebildete erste Anlagefläche in einer zur Maschinenachse in radialer Richtung wegorientierten Richtung vorzugsweise kurvenförmig verlängert.

Im Rahmen der vorliegenden Erfindung wird unter "in radialer Richtung wegorientierten Richtung" ausgehend von der Maschinenachse radial nach außen verstanden.

Gemäß einer vorteilhaften Ausführungsvariante kann dabei vorgesehen sein, dass sich die zweite Anlagefläche unmittelbar benachbart an die erste Anlagefläche in einer zur Maschinenachse wegorientierten Richtung anschließt.

Gemäß einer weiter vorteilhaften Ausführungsvariante kann dabei vorgesehen sein, dass die an dem Transportfinger vorgesehene zweite Anlagefläche dazu ausgebildet ist, bei der Weitergabe des Behälters von dem Rotor auf den in Behandlungsrichtung nachfolgenden zweiten Transporteur nach Verlassen eines Startpunktes der Ausschubbewegung aus der Transporttasche des Rotors bzw. des Transportelementes die Radial- und/oder Tangentialgeschwindigkeit des Behälters während der Krümmungsänderung der Bewegungsbahn dieses Behälters im Vergleich zu dessen Umfangsgeschwindigkeit während des Transports vor Erreichen des Startpunktes der Ausschubbewegung derart zu erhöhen und/oder zu verlangsamen, dass die auf den Behälter wirkende Zentripetalbeschleunigung insgesamt reduziert und/oder kontinuierlich d.h. möglichst ruckfrei verändert wird.

Gemäß einer weiter vorteilhaften Ausführungsvariante kann dabei vorgesehen sein, dass sich die zweite Anlagefläche eines entsprechenden Transportfingers in einem ersten Anlagenflächenabschnitt in radialer Richtung zur Maschinenachse tangential an die erste Anlagefläche anschließt und zwar vorzugsweise derart, dass ein jeweiliger Übergang zwischen der ersten und der zweiten Anlagenfläche glatt ausgebildet ist.

Gemäß einer weiter vorteilhaften Ausführungsvariante kann dabei vorgesehen sein, dass der jeweilige Transportfinger am Umfang des Transportelementes angeordnet ist.

Erfindungsgemäß ist vorgesehen, dass die zweite Anlagenfläche in einer zur Maschinenachse wegorientierten Richtung einen sich an den ersten Anlagenflächenabschnitt benachbart anschließenden zweiten Anlagenflächenabschnitt aufweist, der einen konkav ausgebildeten Beschleunigungs- oder einen konvex ausgebildeten Bremsabschnitt ausbildet.

Gemäß einer weiter vorteilhaften Ausführungsvariante kann dabei vorgesehen sein, dass sich der zweite Anlagenflächenabschnitt jeweils unmittelbar benachbart an den ersten Anlageflächenabschnitt in einer zur Maschinenachse wegorientierten Richtung anschließt.

Gemäß einer weiter vorteilhaften Ausführungsvariante kann dabei vorgesehen sein, dass die zweite Anlagefläche in dem sich an den ersten Anlagenflächenabschnitt in radialer Richtung zur Maschinenachse weggerichtet anschließenden zweiten Anlagenflächenabschnitt zunächst konkav und anschließend konvex gewölbt ist, so dass in dem zweiten Anlagenflächenabschnitt ein Beschleunigungs- und anschließend ein Bremsabschnitt ausgebildet sind.

Gemäß einer weiteren vorteilhaften Ausführungsvariante kann dabei vorgesehen sein, dass die zweite Anlagefläche in dem sich an den ersten Anlagenflächenabschnitt in radialer Richtung zur Maschinenseite weggerichtet anschließenden, zweiten Anlageflächenabschnitt zunächst konvex und anschließend konkav gewölbt ist, so dass in dem zweiten Anlagenflächenabschnitt ein Brems- und ein, an diesen anschließender Beschleunigungsabschnitt ausgebildet sind.

Gemäß einer weiter vorteilhaften Ausführungsvariante werden konkave, konvexe und lineare Flächenabschnitte vorteilhaft so miteinander kombiniert, dass das Schwappverhalten des Füllgutes positiv beeinflusst wird, was bedeutet, dass die Höhe der Schwappbewegungen des Füllgutes reduziert wird.

Gemäß einer weiter vorteilhaften Ausführungsvariante kann dabei vorgesehen sein, dass der zweite Anlagenflächenabschnitt als Klothoide oder Blosskurve oder trigonometrische Funktion oder Polynom höherer Ordnung, insbesondere der Ordnung 2 oder größer ausgebildet ist.

Gemäß einer weiter vorteilhaften Ausführungsvariante kann dabei vorgesehen sein, dass die zweite Anlagefläche einen sich an den zweiten Anlagenflächenabschnitt in einer zur Maschinenachse wegorientierten Richtung anschließenden dritter Anlagenflächenabschnitt aufweist, der sich vorzugsweise unmittelbar benachbart an den zweiten Anlageflächenabschnitt anschließt und der die derselbe radiale Orientierung aufweist, wie der erste Anlagenflächenabschnitt.

Gemäß einer weiter vorteilhaften Ausführungsvariante kann dabei vorgesehen sein, dass die zweite Anlagefläche einen sich konvex an den dritten Anlagenflächenabschnitt in einer zur Maschinenachse wegorientierten Richtung anschließenden vierten Anlagenflächenabschnitt aufweist, der sich vorzugsweise unmittelbar benachbart sowie konvex an den dritten Anlageflächenabschnitt anschließt.

Gemäß einer weiter vorteilhaften Ausführungsvariante kann dabei vorgesehen sein, dass das zweite Transportelement zum Überleiten der Behälter nach Verlassen des Eingriffs durch die Transportfinger des Transportelementes zumindest eine Geländerführung aufweist, entlang der die Behälter in Behandlungsrichtung wenigstens einseitig seitlich geführt sind.

Gemäß einer weiter vorteilhaften Ausführungsvariante kann dabei vorgesehen sein, dass der zweite Transporteur seitlich mitumlaufende Transporteurfinger aufweist, wobei die entsprechenden Behälter mittels einer Anlagenfläche der an dem Transportelement vorgesehen Transportfinger auf eine Geschwindigkeit beschleunigt oder gebremst werden, die der Geschwindigkeit der Transporteurfinger des zweiten Transporteur entspricht, so dass eine ruckfreie Übergabe zwischen dem Rotor und dem zweiten Transporteur erfolgt.

Gemäß einer weiter vorteilhaften Ausführungsvariante kann dabei vorgesehen sein, dass die Behälterbehandlungsvorrichtung als Füllmaschine und/oder Verschließer ausgebildet ist.

Unter "Klothoide" im Sinne der Erfindung wird eine Kurve verstanden, deren Krümmung stetig linear zu- oder abnimmt. Dabei bildet das Produkt aus Kurvenradius und Bogenlänge der Kurve eine Konstante. In anderen Worten ist die Krümmung an jeder Stelle der Kurve proportional zur Länge ihres Bogens bis zu dieser Stelle.

Unter "Behälter" im Sinne der Erfindung werden jedwede Behälter verstanden, insbesondere Flaschen, Dosen, Becher etc., jeweils aus Metall, Glas und/oder Kunststoff, vorzugsweise aus PET (Polyethylenterephthalat).

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft und in schematischer Draufsicht eine Füllmaschine zum Füllen von Dosen oder dergleichen Behälter mit flüssigem Füllgut;
- Fig. 2: beispielhaft und in vereinfachter Darstellung eine mögliche Ausführungsvariante für eine Füllposition der Füllmaschine gemäß Figur 1 mit einer in Dichtlage an dem Füllelement angeordneten Dose;
- Fig. 3: beispielhaft und in schematischer Draufsicht eine Teildarstellung eines Transportelements mit einer Ausführungsvariante eines erfindungsgemäßen Transportfingers; und
- Fig. 4: beispielhaft und in schematischer Draufsicht eine Teildarstellung eines Transportelements mit einer weiteren Ausführungsvariante eines erfindungsgemäßen Transportfingers.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

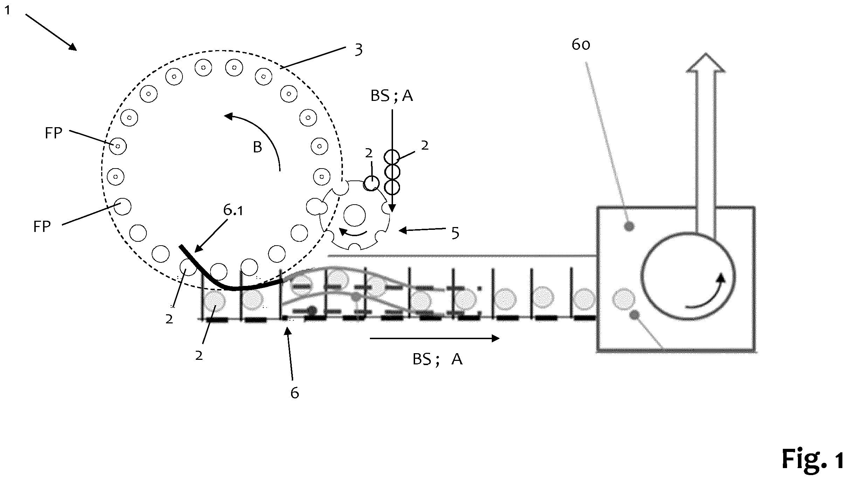

Die in der Fig. 1 allgemein mit 1 bezeichnete Behälterbehandlungsvorrichtung ist dabei als Füllmaschine ausgebildet und dient insbesondere zum Druckfüllen von Behältern 2 in Form von Dosen mit einem flüssigen Füllgut, beispielsweise mit Bier oder Softdrinks entlang einer in einer Behandlungsrichtung A verlaufenden Behälterbehandlungsstrecke BS.

Die Füllmaschine 1 ist als solche umlaufender Bauart mit einem Rotor 3 ausgebildet, der während des Füllbetriebes in einer Drehrichtung B um eine vertikale Maschinenachse MA umlaufend angetrieben ist und an seinem Umfang eine Vielzahl von Füllpositionen FP aufweist, denen die zu befüllenden Behälter 2 über einen ersten als Behältereinlauf ausgebildeten Transporteuer 5 zugeführt und denen die gefüllten Behälter 2 an einem zweiten als Behälterauslauf ausgebildeten Transporteuer 6 entnommen werden. Dabei kann der Behältereinlauf 5 beispielsweise als Einschubstern oder Einlaufstern ausgebildet sein.

Insbesondere kann der als Behälterauslauf ausgebildete zweite Transporteuer 6 als Linearförderer ausgebildet sein, der die dann bereits befüllten, aber noch unverschlossenen Dosen 2 nach Verlassen eines Startpunktes SP der Ausschubbewegung aus der jeweiligen Transporttasche 50 eines Transportelementes 4 übernimmt und entlang der Behälterbehandlungsstrecke BS in Transportrichtung A weiterfördert. Nachfolgend werden die Dosen 2 an einen Verschließer 60, insbesondere an einen Dosenverschließer, gefördert und dort in der dem Fachmann bekannten Weise dicht verschlossen. Im Rahmen einer Verblockung der Füllmaschine 1 kann der Verschließer 60 als Teil oder Bestandteil der Füllanlage und damit der Füllmaschine 1 ausgebildet sein.

Insbesondere bei der Weitergabe der Dosen 2 von dem Rotor 3 der Füllmaschine 1 auf den in Transportrichtung A nachfolgenden zweiten Transporteur 6 kommt es nach Verlassen des Startpunktes SP der Ausschubbewegung aus der Transporttasche 50 des Transportelementes 4 zu einer Krümmungsänderung in der Bewegungsbahn der Dosen 2 und damit zu einem Wechsel der auf die Dosen 2 wirkenden Zentripetalbeschleunigung. Um hier die entstehende Zentripetalbeschleunigung bzw. die Veränderung der Zentripetalbeschleunigung sowie den Gesamtvorgang der Übergabe zu verbessern schlägt die vorliegende Erfindung eine nachstehend näher beschriebene Lösung vor. Unter Startpunkt SP der Ausschubbewegung wird derjenige Moment verstanden, an dem die Dose 2 beginnt, sich aus der jeweiligen Transporttasche 50 herauszubewegen.

Auf dem Winkelbereich der Drehbewegung des Rotors 3 zwischen dem Behältereinlauf 5 und dem Behälterauslauf 6 erfolgt insbesondere das Füllen der Dosen 2, die hierfür mit ihrer Behälterachse parallel zur Maschinenachse MA und achsgleich oder im Wesentlichen achsgleich mit jeweils einer Achse FA der Füllposition FP angeordnet sind. Dieser Prozess wird nachstehend für rotative Füllmaschinen an einem beispielhaft ausgebildeten Füllelement 7 beschrieben, ist jedoch analog auch bei Linearfüllern anwendbar, bspw. können hiermit auch PET-Großgebinde, so genannte KEG für Bier, gefüllt werden.

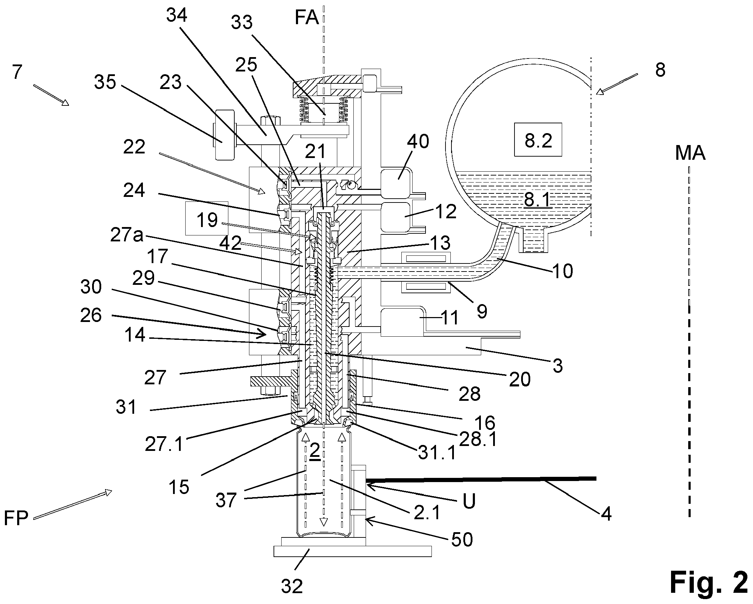

Dabei ist in Fig. 2 beispielhaft der Aufbau des Füllelement 7 einer Füllposition ausgebildeten Behandlungsposition FP gezeigt. Insbesondere ist die vorliegende Erfindung jedoch ausdrücklich nicht auf den gezeigten Aufbau eines in Figur 2 gezeigten Füllelementes 7 und/oder Füllmaschine 1 beschränkt zu verstehen. Vielmehr kann die Behälterbehandlungsvorrichtung 1 auch als Verschließer 60 ausgebildet sein. Derartige Verschließer sind dem Fachmann beispielsweise aus der DE 10 2009 017 109 A1 bekannt. Dabei ist die in der DE 10 2009 017 109 A1 beschriebene Halteplatte 16 technisch mit dem Rotor 3 der vorliegenden Erfindung vergleichbar, an der dann mehrere als Verschließpositionen ausgebildete Behälterbehandlungspositionen FP vorgesehen sind.

Dabei umfasst jede Behandlungsposition FP im Wesentlichen ein Füllelement 7, welches zusammen mit den Füllelementen 7 der übrigen Behandlungspositionen FP am Umfang des Rotors 3 angeordnet ist und damit das Füllsystem der Füllmaschine 1 ausbildet. Am Rotor 3 befindet sich weiterhin ein für sämtliche Behandlungsposition FP gemeinsamer und bei der dargestellten Ausführungsvariante als Ringkessel ausgebildeter Füllgutkessel 8, der während des Füllbetriebes mit dem flüssigen Füllgut teilgefüllt ist, und zwar unter Ausbildung eines unteren Flüssigkeitsraumes 8.1 für das Füllgut und eines Gasraumes 8.2, der von einem unter einem Fülldruck von beispielsweise 3bar bis 5bar stehenden Inert-Gas, beispielsweise CO2-Gas oder Stickstoff, eingenommen ist. Jedes Füllelement 7 ist über eine eigene, einen Durchflussmesser 9 aufweisende Produktleitung 10 mit dem Flüssigkeitsraum 8.1 verbunden.

Am Rotor 3 sind bei der dargestellten Ausführungsform weiterhin drei die Maschinenachse MA umschließende und für sämtliche Behandlungspositionen FP bzw. Füllelemente 7 gemeinsame Ringkanäle, nämlich ein erster Ringkanal 11, ein zweiter Ringkanal 12 sowie ein dritter Ringkanal 40, vorgesehen. Der erste Ringkanal 11 dient als Rücksammelgaskanal zum Abführen von Gas aus dem jeweiligen Füllelement 7, insbesondere auch beim Spülen und/oder Entlasten der Behälter 2.

Der zweite Ringkanal 12 kann als Rückgassammelkanal diesen, in dem zumindest teilweise das während der Spül- und/oder Entlastungsphase verwendete Spül- und/oder Entlastungsgas abgleitet wird, um zumindest teilweise zum Vorspülen des Behälterinnenraumes 2.1 wiederverwendet zu werden.

Der dritte Ringkanal 40 führt während des Füllbetriebes in der nachstehend noch näher beschriebenen Weise das unter Druck stehende Inertgas, beispielsweise CO2-Gas oder Stickstoff. Der Druck im ersten Ringkanal 11 ist beispielsweise der Atmosphärendruck oder ein Unterdruck, während der Druck im zweiten Ringkanal 12 leichter Überdruck herrscht, der im Wesentlichen dem Spül- und/oder Entlastungsdruck von beispielweise 0,2 bis 0,5bar entsprechen kann. Der Druck im dritten Ringkanal 40 ist gleich oder im Wesentlichen gleich dem Fülldruck PF im Gasraum 8.2 oder geringfügig kleiner als dieser Fülldruck.

Das Füllelement 7 umfasst ein Füllelementgehäuse 13 mit einem Flüssigkeitskanal 14, der mit seinem oberen Bereich mit der Produktleitung 10 verbunden ist und an der Unterseite des Füllelementes 7 eine die Achse FA konzentrisch umschließende ringförmige Abgabeöffnung 15 bildet, über die das flüssige Füllgut dem jeweiligen Behälter 2 beim Füllen zugeführt werden kann. Im Flüssigkeitskanal 14 ist in Strömungsrichtung des Füllgutes vor der Abgabeöffnung 15 ein Flüssigkeitsventil 16 vorgesehen, welches im Wesentlichen von einem an einem Ventilstößel 17 angeordneten Ventilkörper 18 gebildet ist.

In der Fig. 2 ist das Flüssigkeitsventil 16 im geschlossenen Zustand dargestellt, in welchem der Ventilkörper 18 gegen eine Ventilfläche, die als Dichtfläche ausgebildet ist, im Flüssigkeitskanal 14 anliegt. Zum Öffnen des Flüssigkeitsventils 16 wird der Ventilkörper 18 mit dem achsgleich mit der Achse FA angeordneten Ventilstößel 17 durch ein vorzugsweise pneumatisch gesteuertes Betätigungselement 19 angehoben. Der Ventilstößel 17 ist als Gasrohr ausgeführt, und zwar mit einem Gaskanal 20, der achsgleich mit der Achse FA angeordnet an der Unterseite im Bereich der Abgabeöffnung 15 und von dieser ringförmig umschlossen offen ist und am oberen Ende des Ventilstößels 17 in einen im Füllelementgehäuse 13 ausgebildeten Gasraum 21 mündet.

Um beim Druckfüllen eines Behälterinnenraums 2.1 der jeweiligen Behälter 2 die verschiedenen Phasen des Füllprozesses zu steuern, sind im Füllelementgehäuse 13 mehrere, steuerbare Gaswege ausgebildet.

Über einen ersten gesteuerten Gasweg 26, der im Füllelementgehäuse 13 ausgebildet ist, sind zwei Rückgasöffnungen 27.1 und 28.1 mit dem ersten Ringkanal 11 verbindbar. Die Rückgasöffnungen 27.1 und 28.1 sind jeweils an der Unterseite des Füllelementes 7 vorgesehen, und zwar gegenüber der Abgabeöffnung 15 bezogen auf die Achse FA radial nach außen versetzt und außerdem in Richtung der Achse FA axial oberhalb der Abgabeöffnung 15. Die Rückgasöffnungen 27.1 und 28.1 sind bei der dargestellten Ausführungsform um 180° um die Achse FA versetzt angeordnet und bilden die unteren Öffnungen oder Anschnitte von Gaskanälen 27 und 28, die sich im Füllelementgehäuse 13 von der jeweiligen Rückgasöffnung 27.1 bzw. 28.1 parallel oder im Wesentlichen parallel zu der Achse FA nach oben erstrecken. Die Gaskanäle 27 und 28 sind Teil des ersten gesteuerten Gasweges 26 und enthalten jeweils ein Steuerventil 29 bzw. 30. Die Steuerventile 29 und 30 sind bei der dargestellten Ausführungsform wiederum pneumatisch betätigbare Ventile. Die Eingänge der Steuerventile 29 und 30 sind jeweils mit einem Rückgaskanal 27 bzw. 28 verbunden. Die Ausgänge beider Steuerventile 29 und 30 sind mit dem ersten Ringkanal 11 verbunden.

Über einen zweiten steuerbaren Gasweg 42, der ebenfalls im Füllelementgehäuse 13 vorgesehen ist, kann die Rückgasöffnung 27.1 mit dem zweiten Ringkanal 12 verbunden werden. Dabei nutzt der zweite Gasweg 42 von der Rückgasöffnung 27.1 weg den Gaskanal 27 des ersten Gasweges 26, der vor dem Steuerventil 29 in den Gaskanal 27a abzweigt, aber mit dem Gaskanal 27 in fluider Verbindung steht. Weiterhin sieht der zweite steuerbare Gasweg 42 ein Steuerventil 24 vor, das pneumatisch betätigbar ist. Der Eingang des Steuerventiles 24 steht dabei mit dem Gaskanal 27a und der Ausgang mit dem zweiten Ringkanal 12 in fluider Verbindung.

Über einen dritten steuerbaren Gasweg 22 ist der Gasraum 21 gesteuert mit dem dritten Ringkanal 40 verbindbar. Dieser dritte Gasweg 22 enthält zudem ein Steuerventil 23, das in der Verbindung zwischen dem dritten Ringkanal 40 und dem Gasraum 21 angeordnet und über einen Gaskanal 25 mit dem Gasraum 21 verbunden ist. Auch das Steuerventil 23 kann dabei als pneumatisch betätigbares Ventil ausgeführt sein.

Das Füllelement 7 umfasst weiterhin eine Zentriertulpe 31, die zumindest beim Spülen, Vorspannen und beim Füllen mit einer Ringdichtung 31.1 abgedichtet gegen den Öffnungsrand des auf einem Behälterträger 32 aufstehenden Behälters 2 anliegt, so dass ein zur Umgebung hin durch das Füllelement 7, die Zentriertulpe 31 und den Behälter 2 abgedichteter Raum gebildet ist, in den die Abgabeöffnung 15, das untere Ende des Gaskanals 20 sowie auch die Rückgasöffnungen 27.1 und 28.1 münden. Ferner ist der Behälter 2 mittel der abgesenkten Zentriertulpe 31 eingespannt, also gehalten. Durch ein pneumatisches Betätigungselement 33 in Form eines beispielsweise mit dem Fülldruck beaufschlagten Faltenbalgs ist die Zentriertulpe 31 über ein Gestänge 34 in seine untere dicht gegen einen Behälter 2 anliegende Stellung vorgespannt. Durch das Zusammenwirken einer am Gestänge 34 vorgesehenen Kurvenrolle 35 mit einer äußeren, mit dem Rotor 3 nicht umlaufenden Hubkurve wird die Zentriertulpe 31 für das Einschieben eines Behälters 2 in die Füllposition FP bzw. für das Entnehmen des gefüllten Behälters 2 aus der Füllposition FP angehoben.

Dabei wird in dem Winkelbereich der Drehbewegung des Rotors 3 zwischen dem Behältereinlauf 5 und dem Behälterauslauf 6 mittels eines unterhalb des Rotors 3, jedoch mit dem Rotor 3 gleichsinnig und synchron um die Maschinenachse MA mitlaufenden Transportelementes 4 eine Drehbewegung auf die Dose 2 eingeleitet. Die Umlaufrichtung UR des Transportelementes 3 entspricht dabei der Drehrichtung B des Rotors 3, sie ist mithin gleichsinnig und synchron.

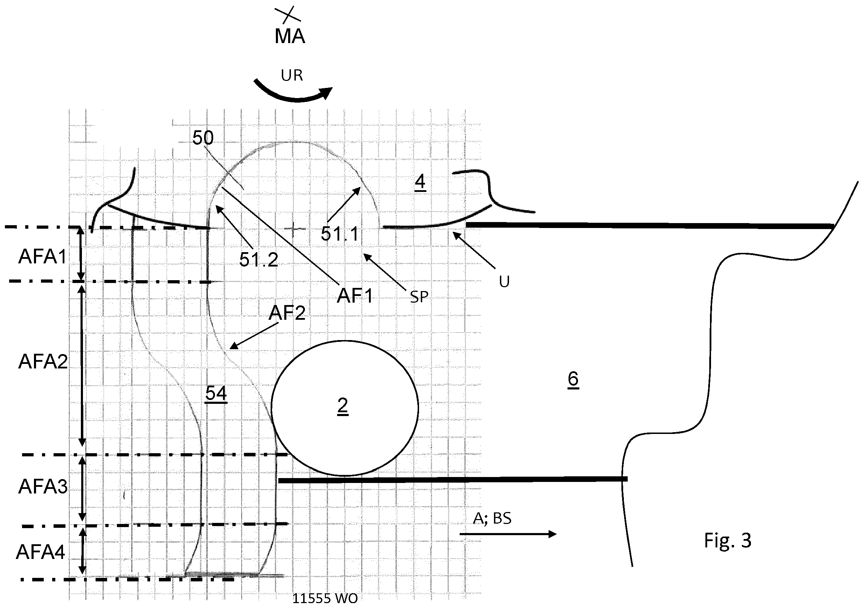

Mehr im Detail (Figur 3) sind hierfür an einem Umfang U des Transportelementes 4 um die Maschinenachse MA verteilt mehrere zu den Transporttaschen 50 ausgebildet, die jeweils wenigstens eine bezogen auf eine Umlaufrichtung UR des Transportelements 4 vorauseilende, vordere Flanke 51.1 und wenigstens eine bezogen auf die Umlaufrichtung UR nacheilende, hintere Flanke 51.2 aufweisen, von denen zumindest die hintere Flanke 51.2 wenigstens in einem Teilbereich eine erste Anlagefläche AF1 zum kontaktschlüssigen Transport der entsprechenden Dose 2 in der zugehörigen Transporttasche 50 ausbildet. Mithin ist also die jeweils hintere Flanke 51.2 einer Transporttasche 50 zumindest mit ihrer ersten Anlagefläche AF1 als Schubflanke ausgebildet, mittels der auf eine Dose 2 eine in Umlaufrichtung UR antreibende Schubbewegung erzeugbar ist. Vorzugsweise ist die jeweilige Transporttasche 50, wenigstens jedoch zumindest die hintere Flanke 51.2, in der Draufsicht teilkreisförmig bzw. kreisbogenförmig ausgebildet.

Die jeweilige Transporttasche 50 umgreift dabei kreisbogenförmig den entsprechenden Außenumfang einer Dose 2 zumindest teilumfänglich sowie kontaktschlüssig auf einem der Maschinenachse MA zugewandten Teilumfang der Außenmantelfläche, also einer bezogen auf die Maschinenachse MA radial inneren Seite, der jeweiligen Dose 2.

Ferner kann zur Führung der Dose 2 an einem der jeweiligen Transporttasche 50 gegenüberliegenden Teilumfang der Außenmantelfläche der Dose 2, also einer der jeweiligen Transporttasche 50 gegenüberliegenden und bezogen auf die Maschineachse MA radial äußeren Seite, ein Führungsgeländer 6.1 vorgesehen sein, das zumindest teilumfänglich zwischen dem Behältereinlauf 5 und dem Behälterauslauf 6 entlang der Behälterbehandlungsstrecke BS im Bereich des Rotors 3 vorgesehen ist und zwar vorzugsweise kreisbogenförmig um die Maschineachse MA.

Gemäß einer weiter vorteilhaften Ausführungsvariante kann dabei vorgesehen sein, dass zumindest einzelne Abschnitte des Führungsgeländers als Klothoide oder Blosskurve oder trigonometrische Funktion oder Polynom höherer Ordnung, insbesondere als Polynom einer Ordnung 2 oder größer, ausgebildet ist.

Erfindungsgemäß ist dabei vorgesehen, dass der jeweils hinteren Flanke 51.2 der entsprechenden Transporttasche 50 jeweils ein Transportfinger 54 zugeordnet ist, der zumindest eine zweite Anlagefläche AF2 aufweist, die die an der hinteren Flanke 51.2 ausgebildete erste Anlagefläche AF1 in einer zur Maschinenachse MA wegorientierten radialen Richtung kurvenförmig verlängert. Dabei schließt sich die zweite Anlagefläche AF2 vorzugsweise unmittelbar benachbart an die erste Anlagefläche AF1 in einer von der Maschinenachse MA wegorientierten Richtung an.

Die an dem Transportfinger 54 vorgesehene zweite Anlagefläche AF2 ist dabei insbesondere dazu ausgebildet, bei der Weitergabe der Dose 2 von dem Rotor 3 der Füllmaschine 1 auf den in Behandlungsrichtung A nachfolgenden zweiten Transporteur 6 nach Verlassen des Startpunktes SP der Ausschubbewegung aus der jeweiligen Transporttasche 50 des Transportelementes 4 die Radial- und/oder Tangentialgeschwindigkeit der Dose 2 während der Krümmungsänderung der Bewegungsbahn dieser Dose 2 im Vergleich zu deren Umfangsgeschwindigkeit während des Transports vor Erreichen des Startpunktes der Ausschubbewegung SP zu erhöhen und/oder zu verlangsamen, um damit die auf die Dose 2 wirkende Zentripetalbeschleunigung abzubauen.

Vorteilhaft ist hierfür vorgesehen, dass sich die zweite Anlagefläche AF2 eines entsprechenden Transportfingers 54 in einem ersten Anlagenflächenabschnitt AFA1 in radialer Richtung zur Maschinenachse MA tangential an die erste Anlagefläche AF1 anschließt. Dabei ist ein jeweiliger Übergang zwischen der ersten und der zweiten Anlagenfläche AF1, AF2 glatt ausgebildet.

Ferner vorteilhaft kann vorgesehen sein, dass der jeweilige Transportfinger 54 an Umfang U des Transportelementes 4 angeordnet ist. Das Transportelement 4 kann dabei kreisscheibenförmig, insbesondere kreisringförmig, ausgebildet sein.

In Abhängigkeit davon, ob die Teilung des dem Rotor 3 in Behandlungsrichtung A nachgelagerten Verschließers 60 größer oder kleiner ausgebildet ist, kann dabei vorgesehen sein, dass die zweite Anlagenfläche AF2 in einer zur Maschinenachse MA wegorientierten Richtung einen sich an den ersten Anlagenflächenabschnitt AFA1 benachbart anschließenden zweiten Anlagenflächenabschnitt AFA2 aufweist, der einen konkav ausgebildeten Beschleunigungs- oder einen konvex ausgebildeten Bremsabschnitt ausbildet. Ferner kann dies auch in Abhängigkeit der Behälterform und/oder der Eigenschaft des Füllgutes, insbesondere der Viskosität der Flüssigkeit erfolgen. Vorteilhaft wird dies dann angewandt, wenn es sich bei der Behälterbehandlungsvorrichtung 1 um eine so genannte verblockte Anlage handelt, bei der die Füllmaschine und der Verschließer 60 als bauliche Einheit ausgeführt sind, d.h. die beiden Anlagenteile unmittelbar aufeinander folgen und die Behälter 2 zwischen den beiden Anlagenteilen zwangsgeführt übergeben werden.

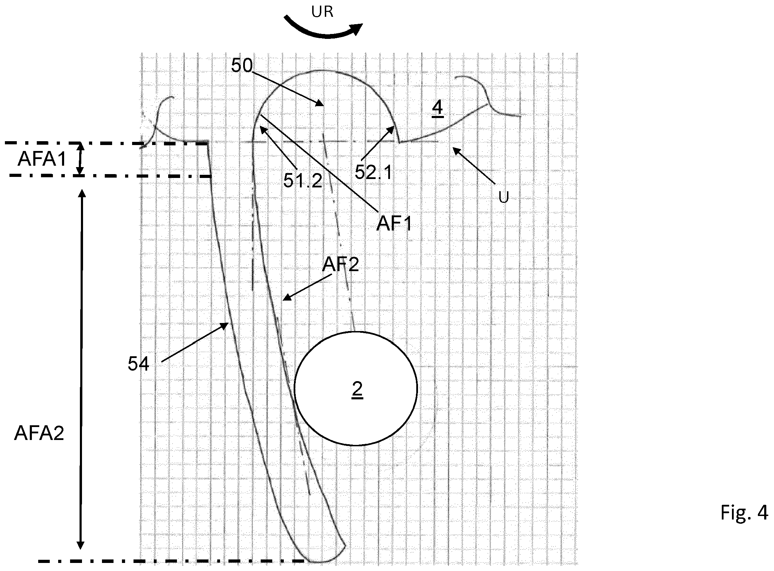

Mehr im Detail ist dabei vorgesehen, dass der zweite Anlagenflächenabschnitt AFA2 in einer zur Maschinenachse MA wegorientierten Richtung als konkav ausgebildeter Beschleunigungsabschnitt verläuft (Figur 4). Dies insbesondere dann, wenn die Teilung des Verschließers 60 größer ausgebildet ist, als die Teilung des Rotors 3.

Alternativ dazu ist vorgesehen, dass der zweite Anlagenflächenabschnitt AFA2 in einer zur Maschinenachse MA wegorientierten Richtung als konvex ausgebildeter Bremsabschnitt verläuft. Dies insbesondere dann, wenn die Teilung des Verschließers 60 kleiner ausgebildet ist, als die Teilung des Rotors 3.

Dabei schließt sich der zweite Anlagenflächenabschnitt AFA2 jeweils vorzugsweise unmittelbar benachbart an den erste Anlageflächenabschnitt AFA1 in einer zur Maschinenachse MA wegorientierten Richtung an.

Dabei kann auch vorgesehen sein, dass die zweite Anlagefläche AF2 in dem sich an den ersten Anlagenflächenabschnitt AFA1 in radialer Richtung zur Maschinenachse MA weggerichtet anschließenden, insbesondere unmittelbar benachbart anschließenden, zweiten Anlagenflächenabschnitt AFA2 zunächst konkav und anschließend konvex gewölbt ist, so dass in dem zweiten Anlagenflächenabschnitt AFA2 erst ein Beschleunigungs- und anschließend ein Bremsabschnitt ausgebildet sind. (Figur 3) Vorzugsweise ist dabei der zweite Anlagenflächenabschnitt AFA2 als Klothoide oder Blosskurve oder trigonometrische Funktion oder Polynom höherer Ordnung, insbesondere der Ordnung 2 oder größer, ausgebildet.

Dabei kann auch vorgesehen sein, dass die zweite Anlagefläche AF2 einen sich an den zweiten Anlagenflächenabschnitt AFA2 in einer zur Maschinenachse MA wegorientierten Richtung anschließenden dritter Anlagenflächenabschnitt AFA3 aufweist, der sich vorzugsweise unmittelbar benachbart an den zweiten Anlageflächenabschnitt AFA2 anschließt und der die derselbe radiale Orientierung aufweist, wie der erste Anlagenflächenabschnitt AFA1 (Figur 3).

Ferner kann auch vorgesehen sein, dass die zweite Anlagefläche AF2 einen sich konvex an den dritten Anlagenflächenabschnitt AFA3 in einer zur Maschinenachse MA wegorientierten Richtung anschließenden vierten Anlagenflächenabschnitt AFA4 aufweist, der sich vorzugsweise unmittelbar benachbart sowie konvex an den dritten Anlageflächenabschnitt AFA3 anschließt (Figur 3).

Ferner kann auch vorgesehen sein, dass die zweite Anlagefläche AF2 einen sich konkav an den dritten Anlagenflächenabschnitt AFA3 in einer zur Maschinenachse MA wegorientierten Richtung anschließenden vierten Anlagenflächenabschnitt AFA4 aufweist, der sich vorzugsweise unmittelbar benachbart sowie konkav an den dritten Anlageflächenabschnitt AFA3 anschließt.

Wie vorstehend beschrieben, werden die Dosen 2 nach dem Verlassen des Startpunktes SP von dem als Behälterauslauf ausgebildeten zweiten Transporteur 6 übernommen. Hierfür kann der zweite Transporteur 6 als endlos umlaufendes Transportband, das beispielsweise als Scharnierbandkette ausgebildet ist, vorgesehen sein, auf dem die Dosen 2 aufstehend auf dem Transportband gefördert werden. Zum Überleiten der Dosen 2 nach Verlassen des Eingriffs durch die Transportfinger 54 des Transportelementes 4 kann das zweite Transportelement 4 zumindest eine Geländerführung 6.1 aufweisen, entlang der die Dosen 2 in Behandlungsrichtung A wenigstens einseitig seitlich geführt sind.

Auch kann vorgesehen sein, dass der zweite Transporteur 6 anstelle der seitlichen Geländerführung 6.1 mit dem Transporteur 6 seitlich mitumlaufende Transporteurfinger aufweist, wobei die entsprechenden Dosen 2 mittels der zweiten Anlagenfläche AF2 der an dem Transportelement 4 vorgesehen Transportfinger 54 auf eine Geschwindigkeit beschleunigt oder gebremst werden, die der Geschwindigkeit der Transporteurfinger des zweiten Transporteur 6 entspricht, so dass eine ruckfreie Übergabe zwischen dem Rotor 3 und dem zweiten Transporteur 6 erfolgt.

Die Erfindung wurde voranstehend an Ausführungsbeispielen beschrieben. Es versteht sich, dass eine Vielzahl von Änderungen oder Abwandlungen möglich sind, ohne dass dadurch der durch die Patentansprüche definierte Schutzbereich der Erfindung verlassen wird.

Die vorstehende Beschreibung beschreibt im Wesentlichen den Fall, dass an einem Umfang U um die Maschinenachse MA verteilt mehrere Transporttaschen vorgesehen sind, die jeweils wenigstens eine bezogen auf eine Umlaufrichtung UR des Transportelements 4 vorauseilende, vordere Flanke 51.1 und wenigstens eine bezogen auf die Umlaufrichtung UR nacheilende, hintere Flanke 51.2 aufweisen, von denen zumindest die hintere Flanke 51.2 wenigstens in einem Teilbereich eine erste Anlagefläche AF1 zum kontaktschlüssigen Transport der Behälter 2 ausbildet, wobei der jeweils hinteren Flanke 51.2 der entsprechenden Transporttasche 50 jeweils ein Transportfinger 54 zugeordnet ist, der zumindest eine zweite Anlagefläche AF2 aufweist, die die an der hinteren Flanke 51.2 ausgebildete erste Anlagefläche AF1 in einer zur Maschinenachse MA wegorientierten radialen Richtung kurvenförmig verlängert.

Dabei ist wesentlich, dass diese Ausführung dann besonders vorteilhaft ist, wenn der Behälter 2 durch die Transporttasche 50 und/oder den Transportfinger 54 geschoben wird.

In weiteren Anwendungsfällen oder Ausführungsformen kann es aber auch vorkommen, dass der Behälter 2 durch die Transporttasche 50 und/oder den Transportfinger 54 zurückgehalten wird, der Behälter 2 also an der ersten Flanke 51.1, bzw. einem an der ersten Flanke 51.1 angeordneten Transportfinger 54 anliegt. Ein solcher Anwendungsfall kann beispielsweise dann vorliegen, wenn der Behälter bereits dann, während er sich noch in der Transporttasche 50 befindet, auf einen Linearförderer mit einer Geschwindigkeit größer als die Umfangsgeschwindigkeit des Transportelementes 4 aufgeschoben wird.

Es versteht sich von selbst, dass bei einer solchen Anordnung, die in den Figuren 3 und 4 dargestellten Bauteile und Anordnungen, bei unveränderter Transportrichtung und bei unveränderter Umlaufrichtung, spiegelbildlich zu den Figuren 3 und 4 auszuführen sind.

Weiterhin bezieht sich die vorstehende Beschreibung im Wesentlichen auf die Vorgänge und Abläufe die zu beachten sind, wenn eine befüllter Behälter eine als Füllmaschine ausgebildete Behälterbehandlungsmaschine verlässt.

Es ist im Rahmen der vorliegenden Erfindung ebenfalls vorgesehen, die erfindungsgemäße technische Lehre auch auf den Einlauf eines gefüllten, aber noch unverschlossenen Behälters in eine als Verschließmaschine ausgebildete Behälterbehandlungsmaschine anzuwenden. Dieses ist möglich, da die entsprechenden physikalischen Gesetzmäßigkeiten in einer Verschließmaschine analog gelten, und die erfindungsgemäße Lehre somit auch in einer Verschließmaschine vorteilhaft anwendbar ist.

### Bezugszeichenliste

- 1: Füllmaschine
- 2: Behälter
- 2.1: Behälterinnenraum
- 3: Rotor
- 4: Transportelement
- 5: Behältereinlauf
- 6: Behälterauslauf
- 6.1: Geländerführung
- 7: Füllelement
- 8: Füllgutkessel
- 8.1: Flüssigkeitsraum
- 8.2: Gasraum
- 9: Durchflussmesser
- 10: Produktleitung
- 11: erster Ringkanal
- 12: zweiter Ringkanal
- 13: Füllelementgehäuse
- 14: Flüssigkeitskanal
- 15: Abgabeöffnung
- 16: Flüssigkeitsventil
- 17: Ventilstößel
- 18: Ventilkörper
- 19: Betätigungselement
- 20: Gaskanal
- 21: Gasraum
- 22: dritter gesteuerter Gasweg
- 23: Steuerventil
- 24: Steuerventil
- 25: Gaskanal
- 26: erster gesteuerter Gasweg
- 27, 28: Gaskanal
- 27.1, 28.1: Rückgasöffnung
- 29, 30: Steuerventil
- 31: Zentriertulpe
- 32: Behälterträger
- 33: Betätigungselement
- 34: Gestänge
- 35: Kurvenrolle
- 37: Strömung des Inertgases beim Spülen
- 40: dritter Ringkanal
- 41: Druckregeleinrichtung
- 42: zweiter gesteuerter Gasweg
- 50: Transporttasche
- 51.1: erster Flanke
- 51.2: zweite Flanke
- 53: Führungsgeländer
- 54: Transportfinger

- 60: Verschließer

- A: Behandlungsrichtung
- AF1: erster Anlagenfläche
- AF2: zweiter Anlagenfläche
- AFA1: erster Anlagenflächenabschnitt
- AFA2: zweiten Anlagenflächenabschnitt
- AFA3: dritter Anlagenflächenabschnitt
- AFA4: vierter Anlagenflächenabschnitt
- BS: Behälterbehandlungsstrecke
- B: Drehrichtung des Rotors 3
- FA: Füllelementachse
- FP: Behälterbehandlungsposition
- MA: Maschinenachse
- SP: Startpunkt Ausschubbewegung
- U: Umfang
- UR: Umlaufrichtung Transportelement 4

## Patentansprüche

1. Behälterbehandlungsvorrichtung, insbesondere Füllmaschine zum Füllen von Dosen oder dergleichen Behälter (2) mit einem
flüssigen Füllgut entlang einer in einer Behandlungsrichtung (A) verlaufenden Behälterbehandlungsstrecke (BS),
umfassend einen ersten als Behältereinlauf ausgebildeten Transporteur (5), einen in Behandlungsrichtung (A) nachgelagerten und um eine Maschinenachse (MA) umlaufenden Rotor (3), sowie einen dem Rotor (3) in Behandlungsrichtung (A) wiederum nachgelagerten und als Behälterauslauf ausgebildeten zweiten Transporteur (6),
wobei an dem umlaufenden Rotor (3) mehrere Behandlungspositionen (FP) ausgebildet sind, wobei am Rotor (3) ein mit dem Rotor (3) gleichsinnig synchron um die Maschinenachse (MA) mitlaufendes Transportelement (4) vorgesehen ist, das an einem Umfang (U) um die Maschinenachse (MA) verteilt mehrere Transporttaschen (50) aufweist, die jeweils wenigstens eine bezogen auf eine Umlaufrichtung (UR) des Transportelements (4) vorauseilende, vordere Flanke (51.1) und wenigstens eine bezogen auf die Umlaufrichtung (UR) nacheilende, hintere Flanke (51.2) aufweisen, von denen die hintere Flanke (51.2) und/oder die vorderer Flanke (51.1) wenigstens in einem Teilbereich eine erste Anlagefläche (AF1) zum kontaktschlüssigen Transport der Behälter (2) ausbildet,
und wobei der jeweils vorderen Flanke (51.1) und/oder der jeweils hinteren Flanke (51.2) der entsprechenden Transporttasche (50) jeweils ein Transportfinger (54) zugeordnet ist, der zumindest eine zweite Anlagefläche (AF2) aufweist, die die an der Flanke (51.1; 51.2) ausgebildete erste Anlagefläche (AF1) in einer zur Maschinenachse (MA) wegorientierten radialen Richtung kurvenförmig verlängert, **dadurch gekennzeichnet, dass** die zweite Anlagenfläche (AF2) in einer zur Maschinenachse (MA) wegorientierten Richtung einen sich an den ersten Anlagenflächenabschnitt (AFA1) benachbart anschließenden zweiten Anlagenflächenabschnitt (AFA2) aufweist, der einen konkav ausgebildeten Beschleunigungs- oder einen konvex ausgebildeten Bremsabschnitt ausbildet.

2. Behälterbehandlungsvorrichtung nach Anspruch 1, **dadurch gekennzeichnet, dass** sich die zweite Anlagefläche (AF2) unmittelbar benachbart an die erste Anlagefläche (AF1) in einer zur Maschinenachse (MA) wegorientierten Richtung anschließt.

3. Behälterbehandlungsvorrichtung nach Anspruch 1 oder 2, **dadurch gekennzeichnet, dass** die an dem Transportfinger (54) vorgesehene zweite Anlagefläche (AF2) dazu ausgebildet ist, bei der Weitergabe des Behälters (2) von dem Rotor (3) auf den in Behandlungsrichtung (A) nachfolgenden zweiten Transporteur (6) nach Verlassen eines Startpunktes (SP) der Ausschubbewegung aus der jeweiligen Transporttasche (50) des Transportelementes (4) die Radial- und/oder Tangentialgeschwindigkeit des Behälters (2) während der Krümmungsänderung der Bewegungsbahn dieses Behälters (2) im Vergleich zu dessen Umfangsgeschwindigkeit während des Transports vor Erreichen des Startpunktes (SP) der Ausschubbewegung derart zu erhöhen und/oder zu verlangsamen, dass die auf den Behälter (2) wirkende Zentripetalbeschleunigung abgebaut wird.

4. Behälterbehandlungsvorrichtung nach einem der vorhergehenden Ansprüche, **dadurch gekennzeichnet, dass** sich die zweite Anlagefläche (AF2) eines entsprechenden Transportfingers (54) in einem ersten Anlagenflächenabschnitt (AFA1) in radialer Richtung zur Maschinenachse (MA) tangential an die erste Anlagefläche (AF1) anschließt und zwar vorzugsweise derart, dass ein jeweiliger Übergang zwischen der ersten und der zweiten Anlagenfläche (AF1, AF2) glatt ausgebildet ist.

5. Behälterbehandlungsvorrichtung nach einem der vorhergehenden Ansprüche, **dadurch gekennzeichnet, dass** der jeweilige Transportfinger (54) an Umfang (U) des Transportelementes (4) angeordnet ist.

6. Behälterbehandlungsvorrichtung nach einem der vorhergehenden Ansprüche, **dadurch gekennzeichnet, dass** sich der zweite Anlagenflächenabschnitt (AFA2) jeweils unmittelbar benachbart an den ersten Anlageflächenabschnitt (AFA1) in einer zur Maschinenachse (MA) wegorientierten Richtung anschließt.

7. Behälterbehandlungsvorrichtung nach einem der vorhergehenden Ansprüche, **dadurch gekennzeichnet, dass** die zweite Anlagefläche (AF2) in dem sich an den ersten Anlagenflächenabschnitt (AFA1) in radialer Richtung zur Maschinenachse (MA) weggerichtet anschließenden zweiten Anlagenflächenabschnitt (AFA2) zunächst konkav und anschließend konvex gewölbt ist, so dass in dem zweiten Anlagenflächenabschnitt (AFA2) ein Beschleunigungs- und anschließend ein Bremsabschnitt ausgebildet sind.

8. Behälterbehandlungsvorrichtung nach Anspruch 7, **dadurch gekennzeichnet, dass** der zweite Anlagenflächenabschnitt (AFA2) als Klothoide oder Blosskurve oder Polynom höherer Ordnung, insbesondere einer Ordnung größer 2, ausgebildet ist.

9. Behälterbehandlungsvorrichtung nach einem der vorhergehenden Ansprüche, **dadurch gekennzeichnet, dass** die zweite Anlagefläche (AF2) einen sich an den zweiten Anlagenflächenabschnitt (AFA2) in einer zur Maschinenachse (MA) wegorientierten Richtung anschließenden dritter Anlagenflächenabschnitt (AFA3) aufweist, der sich vorzugsweise unmittelbar benachbart an den zweiten Anlageflächenabschnitt (AFA2) anschließt und der die derselbe radiale Orientierung aufweist, wie der erste Anlagenflächenabschnitt (AFA1).

10. Behälterbehandlungsvorrichtung nach einem der vorhergehenden Ansprüche, **dadurch gekennzeichnet, dass** die zweite Anlagefläche (AF2) einen sich konvex an den dritten Anlagenflächenabschnitt (AFA3) in einer zur Maschinenachse (MA) wegorientierten Richtung anschließenden vierten Anlagenflächenabschnitt (AFA4) aufweist, der sich vorzugsweise unmittelbar benachbart sowie konvex an den dritten Anlageflächenabschnitt (AFA3) anschließt.

11. Behälterbehandlungsvorrichtung nach einem der vorhergehenden Ansprüche, **dadurch gekennzeichnet, dass** das zweite Transportelement (4) zum Überleiten der Behälter (2) nach Verlassen des Eingriffs durch die Transportfinger (54) des Transportelementes (4) zumindest eine Geländerführung (6.1) aufweist, entlang der die Behälter (2) in Behandlungsrichtung (A) wenigstens einseitig seitlich geführt sind.

12. Behälterbehandlungsvorrichtung nach einem der vorhergehenden Ansprüche, **dadurch gekennzeichnet, dass** der zweite Transporteur (6) seitlich mitumlaufende Transporteurfinger aufweist, wobei die entsprechenden Behälter (2) mittels der zweiten Anlagenfläche (AF2) der an dem Transportelement (4) vorgesehen Transportfinger (54) auf eine Geschwindigkeit beschleunigt oder gebremst werden, die der Geschwindigkeit der Transporteurfinger des zweiten Transporteur (6) entspricht, so dass eine ruckfreie Übergabe zwischen dem Rotor (3) und dem zweiten Transporteur (6) erfolgt.

13. Behälterbehandlungsvorrichtung nach einem der vorhergehenden Ansprüche, **dadurch gekennzeichnet, dass** die Behälterbehandlungsvorrichtung als Füllmaschine und/oder Verschließer (60) ausgebildet ist.

## Claims

1. Container-handling apparatus, in particular a filling machine for filling cans or similar containers (2) with liquid contents along a container handling line (BS) running in a handling direction (A), comprising a first transporter (5) configured as a container inlet, a rotor (3), located downstream in the handling direction (A) and rotating about a machine axis (MA), and a second transporter (6), further downstream of the rotor (3) in the handling direction (A) and configured as a container outlet, wherein a plurality of handling positions (FP) are formed at the circulating rotor (3), wherein a transport element (4) is provided at the rotor (3) which runs in synchrony with the rotor (3) and in the same direction about the machine axis (MA) and which comprises a plurality of transportation pockets (50) distributed at a circumference (U) about the machine axis (MA), which each comprise at least one front flank (51.1) which precedes the transport element (4) in relation to the circumferential direction (UR), and at least one rear flank (51.2) following after it in relation to the circumferential direction (UR), of which the rear flank (51.2) and/or the front flank (51.1) forms a first abutment surface (AF1) at least in one part region for the positive contact transport of the containers (2), and wherein in each case a respective transportation finger (54) is assigned to the corresponding transportation pocket (50) of the respective front flank (51.1) and/or the respective rear flank (51.2), which comprises at least one second abutment surface (AF2), which extends in curved form the first abutment surface (AF1) formed at the flank (51.1, 51.2) in a radial direction oriented away from the machine axis (MA), **characterised in that** the second abutment surface (AF2) comprises, in a direction oriented away from the machine axis (MA), a second abutment surface section (AFA2) connecting adjacent to the first abutment surface section (AFA1), which forms a concave-shaped acceleration section or a convex-shaped braking section.

2. Container handling apparatus according to claim 1, **characterised in that** the second abutment surface (AF2) connects directly adjacent to the first abutment surface (AF1) in a direction oriented away from the machine axis (MA).

3. Container handling apparatus according to claim 1 or 2, **characterised in that** the second abutment surface (AF2) provided at the transport finger (54) is configured such that, at the further conveying of the container (2) from the rotor (3) onto the second transporter (6) following in the handling direction (A), after leaving a starting point (SP) of the departure movement out of the respective transportation pocket (50) of the transport element (4), it increases and/or decreases the radial and/or tangential speed of the container (2) during the change of curvature of the movement path of this container (2), in comparison with its circumference during transport and before reaching the start point (SP) of the departure movement, in such a way that the centripetal acceleration taking effect on the container (2) is decreased.

4. Container handling apparatus according to any one of the preceding claims, **characterised in that** the second abutment surface (AF2) of a corresponding transportation finger (54) in a first abutment surface section (AF1) connects, in the radial direction to the machine axis (MA), tangentially to the first abutment surface (AF1), and preferably in such a way that a respective transition between the first and the second abutment surfaces (AF1, AF2) are configured as flat and smooth.

5. Container handling apparatus according to any one of the preceding claims, **characterised in that** the respective transportation finger (54) is arranged at the circumference (U) of the transport element (4).

6. Container handling apparatus according to any one of the preceding claims, **characterised in that** the second abutment surface section (AFA2) in each case connects directly adjacent to the first abutment surface section (AFA1) in a direction oriented away from the machine axis (MA).

7. Container handling apparatus according to any one of the preceding claims, **characterised in that** the second abutment surface (AF2), in the second abutment surface section (AFA2) connecting to the first abutment surface section (AFA1) oriented in a radial direction away from the machine axis (MA), is curved first concave and then convex, such that, in the second abutment surface section (AFA2), an acceleration section is formed and then a braking section.

8. Container handling apparatus according to claim 7, **characterised in that** the second abutment surface section (AFA2) is configured as a clothoid or Bloss curve or polynomial of higher order, in particular an order greater than 2.

9. Container handling apparatus according to any one of the preceding claims, **characterised in that** the second abutment surface (AF2) comprises a third abutment surface section (AFA3), which connects, preferably directly adjacent, to the second abutment surface (AFA2) in a direction oriented away from the machine axis (MA), which preferably connects immediately adjacent to the second abutment surface (AFA2) and has the same radial orientation as the first abutment surface section (AFA1).

10. Container handling apparatus according to any one of the preceding claims, **characterised in that** the second abutment surface (AF2) comprises a fourth abutment surface section (AFA4), connecting in a convex manner to the third abutment surface section (AFA3) in a direction oriented away from the machine axis (MA), and which connects, preferably directly adjacent as well as in a convex manner to the third abutment surface section (AFA3).

11. Container handling apparatus according to any one of the preceding claims, **characterised in that** the second transport element (4) comprises at least one railing guide (6.1) for transferring the containers (2) after leaving the engagement by the transportation fingers (54) of the transport element (4), along which the containers (2) are guided laterally on at least one side in the handling direction (A).

12. Container handling apparatus according to any one of the preceding claims, **characterised in that** the transporter (6) comprises transportation fingers which move conjointly laterally, wherein the corresponding containers (2) are accelerated or braked, by means of the second abutment surface (AF2) provided at the transport element (4), to a speed which corresponds to the speed of the transportation fingers (54) of the second transporter (6), such that a jolt-free transfer is achieved between the rotor (3) and the second transporter (6).

13. Container handling apparatus according to any one of the preceding claims, **characterised in that** the container handling apparatus is configured as a filling machine and/or closing machine (60).

## Revendications

1. Dispositif de traitement de contenants, en particulier machine de remplissage pour le remplissage de boîtes ou de contenants (2) similaires avec un produit de remplissage liquide le long d'une ligne de traitement de contenants (BS) s'étendant dans une direction de traitement (A),
comprenant un premier transporteur (5) réalisé en tant qu'entrée de contenants, un rotor (3) monté en aval dans la direction de traitement (A) et se déplaçant en périphérie autour d'un axe de machine (MA), ainsi qu'un deuxième transporteur (6) monté à nouveau en aval du rotor (3) dans la direction de traitement (A) et réalisé en tant que sortie de contenants,
dans lequel plusieurs positions de traitement (FP) sont réalisées sur le rotor (3) se déplaçant en périphérie, dans lequel un élément de transport (4) se déplaçant de manière entraînée conjointement avec le rotor (3) dans le même sens de manière synchrone autour de l'axe de machine (MA) est prévu sur le rotor (3), lequel présente, de manière répartie sur une périphérie (U) autour de l'axe de machine (MA), plusieurs compartiments de transport (50), qui présentent respectivement au moins un flanc avant (51.1) qui précède par rapport à la direction de déplacement en périphérie (UR) de l'élément de transport (4) et au moins un flanc arrière (51.2) qui suit par rapport à une direction de déplacement en périphérie (UR), dont le flanc arrière (51.2) et/ou le flanc avant (51.1) réalisent au moins dans une zone partielle une première surface d'appui (AF1) pour le transport par liaison de contact des contenants (2),
et dans lequel est associé au flanc avant (51.1) respectivement et/ou au flanc arrière (51.2) respectivement du compartiment de transport (50) correspondant, respectivement un doigt de transport (54), qui présente au moins une deuxième surface d'appui (AF2), qui prolonge en forme de courbe dans une direction radiale orientée de manière à s'éloigner par rapport à l'axe de machine (MA) la première surface d'appui (AF1) réalisée sur le flanc (51.1 ; 51.2), **caractérisé en ce que** la deuxième surface d'appui (AF2) présente, dans une direction orientée de manière à s'éloigner par rapport à l'axe de machine (MA), une deuxième section de surface d'appui (AFA2) se raccordant de manière adjacente à la première section de surface d'appui (AFA1), qui réalise une section d'accélération réalisée de manière concave ou une section de ralentissement réalisée de manière convexe.

2. Dispositif de traitement de contenants selon la revendication 1, **caractérisé en ce que** la deuxième surface d'appui (AF2) se raccorde de manière directement adjacente à la première surface d'appui (AF1) dans une direction orientée de manière à s'éloigner par rapport à l'axe de machine (MA).

3. Dispositif de traitement de contenants selon la revendication 1 ou 2, **caractérisé en ce que** la deuxième surface d'appui (AF2) prévue sur le doigt de transport (54) est réalisée pour augmenter et/ou ralentir la vitesse radiale et/ou tangentielle du contenant (2) pendant la modification d'incurvation de la voie de déplacement dudit contenant (2) en comparaison à sa vitesse périphérique pendant le transport avant d'atteindre un point de départ (SP) du déplacement d'extraction lors du transfert du contenant (2) du rotor (3) sur le deuxième transporteur (6) qui suit dans la direction de traitement (A) après avoir quitté le point de départ (SP) du déplacement d'extraction hors du compartiment de transport (50) respectif de l'élément de transport (4) de manière à abaisser l'accélération centripète agissant sur le contenant (2).

4. Dispositif de traitement de contenants selon l'une quelconque des revendications précédentes, **caractérisé en ce que** la deuxième surface d'appui (AF2) d'un doigt de transport (54) correspondant se raccorde de manière tangentielle à la première surface d'appui (AF1) dans une direction radiale par rapport à l'axe de machine (MA) dans une première section de surface d'appui (AFA1), à savoir de préférence de telle manière qu'une transition respective entre la première et la deuxième surface d'appui (AF1, AF2) est réalisée de manière lisse.

5. Dispositif de traitement de contenants selon l'une quelconque des revendications précédentes, **caractérisé en ce que** le doigt de transport (54) respectif est disposé sur la périphérie (U) de l'élément de transport (4).

6. Dispositif de traitement de contenants selon l'une quelconque des revendications précédentes, **caractérisé en ce que** la deuxième section de surface d'appui (AFA2) se raccorde respectivement de manière directement adjacente à la première section de surface d'appui (AFA1) dans une direction orientée de manière à s'éloigner de l'axe de machine (MA).

7. Dispositif de traitement de contenants selon l'une quelconque des revendications précédentes, **caractérisé en ce que** la deuxième surface d'appui (AF2) dans la deuxième section de surface d'appui (AFA2) se raccordant avec un éloignement dirigé à la première section de surface d'appui (AFA1) dans une direction radiale par rapport à l'axe de machine (MA) est bombée d'abord de manière concave puis de manière convexe de sorte qu'une section d'accélération puis une section de ralentissement sont réalisées dans la deuxième section de surface d'appui (AFA2).

8. Dispositif de traitement de contenants selon la revendication 7, **caractérisé en ce que** la deuxième section de surface d'appui (AFA2) est réalisée en tant qu'une clothoïde ou une courbe en ove ou un polynôme de rang supérieur, en particulier d'un rang supérieur à 2.

9. Dispositif de traitement de contenants selon l'une quelconque des revendications précédentes, **caractérisé en ce que** la deuxième surface d'appui (AF2) présente une troisième section de surface d'appui (AFA3) se raccordant à la deuxième section de surface d'appui (AFA2) dans une direction orientée de manière à s'éloigner par rapport à l'axe de machine (MA), qui se raccorde de préférence de manière directement adjacente à la deuxième section de surface d'appui (AFA2) et qui présente la même orientation radiale que la première section de surface d'appui (AFA1).

10. Dispositif de traitement de contenants selon l'une quelconque des revendications précédentes, **caractérisé en ce que** la deuxième surface d'appui (AF2) présente une quatrième section de surface d'appui (AFA4) se raccordant de manière convexe à la troisième section de surface d'appui (AFA3) dans une direction orientée de manière à s'éloigner par rapport à l'axe de machine (MA), qui se raccorde de préférence de manière directement adjacente et de manière convexe à la troisième section de surface d'appui (AFA3).

11. Dispositif de traitement de contenants selon l'une quelconque des revendications précédentes, **caractérisé en ce que** le deuxième élément de transport (4) présente pour faire passer les contenants (2) après avoir quitté la prise par le doigt de transport (54) de l'élément de transport (4), au moins un guidage à garde-fou (6.1), le long duquel les contenants (2) sont guidés latéralement au moins d'un côté dans la direction de traitement (A).

12. Dispositif de traitement de contenants selon l'une quelconque des revendications précédentes, **caractérisé en ce que** le deuxième transporteur (6) présente des doigts transporteurs se déplaçant de manière entraînée latéralement, dans lequel les contenants (2) correspondants sont accélérés ou ralentis au moyen de la deuxième surface d'appui (AF2) du doigt de transport (54) prévu sur l'élément de transport (4) sur une vitesse, qui correspond à la vitesse du doigt transporteur du deuxième transporteur (6) de sorte qu'un transfert sans à-coups entre le rotor (3) et le deuxième transporteur (6) a lieu.

13. Dispositif de traitement de contenants selon l'une quelconque des revendications précédentes, **caractérisé en ce que** le dispositif de traitement de contenants est réalisé en tant que machine de remplissage et/ou capsuleuse (60).
